# EUROPEAN PATENT APPLICATION

(11) **EP 2 113 859 A1**
(43) Date of publication of application: **04.11.2009**
(21) Application number: 08711546.5
(22) Date of filing: 19.02.2008
(51) Int. Cl.: G06F 21/22, G06F 9/445, G06F 12/14

(54) **COMPUTER, OPERATION RULE APPLICATION METHOD, AND OPERATING SYSTEM**

(30) Priority: 21.02.2007 JP 2007040746
(71) Applicant: NEC Corporation, Minato-ku Tokyo 108-8001 (JP)
(72) Inventor: HIGUCHI, Naoshi, Tokyo 108-8001 (JP)
(74) Representative: Vossius & Partner
(86) International application number: PCT/JP2008/052722
(87) International publication number: WO 2008/114560

(57) **Abstract**

Provided is an operating system enabling, in an application formed of a plurality of programs including a library program, a rule to be applied that enables determination whether to allow processing of a system call called by the application.

An address on a memory into which a program is loaded is stored so as to be correlated with the program as an address range set, each program is loaded into a memory in the processing of starting ain application to store an address range set in an address range set storing unit, upon receiving a call-up of a system call from the application, various kinds of processing are executed, and an operation rule which describes allowance/non-allowance of use of a system call by a program forming the application is stored to determine, based on an operation rule corresponding to a program of a calling source of the system call, whether to execute processing called by a system call processing unit.

## Description

### TECHNICAL FIELD

The present invention relates to a computer mounted with an operating system and, more particularly, a computer, an operation rule application method and an operating system for individually controlling each program forming an application.

### BACKGROUND ART

One example of an operating system as related art is recited in Non-Patent Literature 1. The operating system recited in the Non-Patent Literature 1 operates to determine whether to allow or inhibit execution of a system call called up by an application by specifying "policy" which is an operation rule for controlling operation of the application based on classification information called "type" which is applied to a program as a start of execution of a program among programs forming the application.

Assume here that when a certain application (assumed to be an application A, for example) uses an HTTP communication library for executing HTTP communication, an operation rule for controlling operation of a program as a start of execution of the application A is described to include an operation rule of the HTTP communication library.

When another application (assumed to be an application B, for example) uses the same HTTP communication library as that used by the application A in order to execute HTTP communication, among operation rules of the program as a start of the execution of the application A, as to a part describing operation of the HTTP communication library, an operation rule of a program as a start of execution of the application B is again described to include an operation rule of the HTTP communication library similarly to the operation rule of the application A.

In a case of the above-described related art, when operation of the HTTP communication library is changed by version-up or the like, in particular, while operation rules of the HTTP communication library need to be changed as well, rewriting of both the operation rule of the program as a start of execution of the application A and the operation rule of the program as a start of execution of the application B is required.

Other operating system recited in Patent Literature 1, when a plurality of operation rule candidates exist because hard link is formed in a file of a program as a start of execution of an application or for other reason, operates to apply an operation rule which will be a complete subset of other operation rules among operation rule groups. When there exists no operation rule which will be a complete subset, the system operates to apply most restrictive operation rule.

The device recited in Patent Literature 2 operates to change the determination whether to allow execution of a privileged instruction or not according to whether an address at the time of privileged instruction execution is in a ROM region or a RAM region. The device seems to control execution of a privileged instruction by individually designating an operation rule for a ROM region and an operation rule for a RAM region.

Patent Literature 1: Japanese Patent Laying-Open No. 2004-303243.

Patent Literature 2: Japanese Patent No. 3763142.

Non-Patent Literature 1: Peter Loscocco, Stephen Smalley, "Integrating Flexible Support for Security Policies into the Linux Operating System", in Proceedings of the FREENIX Track of the 2001 USENIX Annual Technical Conference.

Application of an operation rule in the above-described related art operating system has the following problems.

First problem is that when in the operating system recited in Non-Patent Literature 1, there exist two or more programs forming an application, it is impossible to individually describe an operation rule for each program to control operation of the application.

The reason is that since among programs forming the application, an operation rule can be described only with respect to a program as a start of execution of the application and no operation rule can be described with respect to other programs forming the application.

Second problem is that the operating system recited in Patent Literature 1 fails to divide and describe operation rules of the application and switch an operation rule to be applied based on to which program an execution point belongs.

The reason is that switching an operation rule to be applied is executed not based on to which program an execution point belongs but by comparison of contents of operation rules.

Third problem is that the device recited in Patent Literature 2 makes it difficult to flexibly describe an operation rule.

The reason is that only execution of a privileged instruction is a target to be controlled by an operation rule and with respect to such complicated processing as a system call provided by an operating system, no operation rule can be described.

Fourth problem is that in the device recited in Patent Literature 2, determination as to which operation rule among a plurality of operation rules is to be applied cannot be switched according to a difference in an address at the execution point on the RAM.

The reason is that an operation rule to be applied is switched according to whether an address at the execution point is on a ROM region or a RAM region.

### (object of the Present Invention)

An object of the present invention is to realize a computer, an operation rule application method and an operating system which enable, in an application formed of a plurality of programs including a library program, such an operation rule to be applied as determines whether to allow processing of a system call called by the application or not according to which individual program a program execution point belongs.

### SUMMARY

1. A computer, comprising:
   an address range set storing unit for storing, as an address range set, an address on a memory into which at least one program forming an application is loaded so as to be correlated with said program;
   an application loading unit having a function of loading each program forming the application into the memory and storing said address range set in the address range set storing unit in application starting processing;
   a system call processing unit for executing various kinds of processing in response to a call-up of a system call from the application;
   an operation rule storing unit for storing an operation rule which describes allowance/non-allowance of use of a system call by a program forming the application; and
   an operation rule applying unit for determining, based on said operation rule corresponding to a program of a calling source of a system call, whether to execute processing called up by said system call processing unit.
14. An operation rule application method by an operating system, comprising:
   in processing of loading each program forming an application into a memory, storing, as an address range set, an address on a memory into which each program forming the application is loaded in an address range set storing unit corresponding to said program; and
   when executing various kinds of processing in response to a call-up of a system call from the application, selecting said operation rule corresponding to a program of a calling source of the system call from an operation rule storing unit for storing an operation rule which describes allowance/non-allowance of use of a system call on a basis of a program forming the application, and applying an operation rule to each program forming the application individually by determining whether to execute processing called up by said system call.
27. An operating system which causes a computer to execute processing of:
   in processing of loading each program forming an application into a memory, storing, as an address range set, an address on a memory into which each program forming the application is loaded in an address range set storing unit corresponding to said program; and
   when executing various kinds of processing in response to a call-up of a system call from the application, selecting said operation rule corresponding to a program of a calling source of the system call from an operation rule storing unit for storing an operation rule which describes allowance/non-allowance of use of a system call on a basis of a program forming the application, and applying an operation rule to each program forming the application individually by determining whether to execute processing called up by said system call.

The present invention realizes such effects as follows.

First effect is to divide operation rules four controlling operation of an application into an operation rule related to an application main body program and an operation rule related to a library program used by the application and describe each rule.

The reason is that even when the application is formed by a plurality of programs, a program of a system call calling.source is specified at the time of execution to apply an operation rule.

Second effect is to switch an operation rule for controlling operation of the application according to a program to which an execution point belongs.

The reason is that since an application loading unit stores an address range set with address ranges at which individual programs are loaded paired in an address range set storing unit, at the time of calling a system call, from a system call calling source address, to which program the address belongs can be specified.

Third effect is to describe flexible operation rules.

The reason is that since an operation rule applying unit applies an operation rule at the time of calling a system call, an operation rule can be described not on a basis of such a small processing unit as a privileged instruction but on a basis of a large processing unit including such complicated processing as a system call.

Fourth effect is to switch an operation rule to be applied according to difference in an address of an execution point on a memory.

The reason is that an operation rule to be applied is switched by comparing each address range included in an address range set stored by the address range set storing unit and an address of an execution point but not by a difference in the storage unit.

### BRIEF DESCRIPTION OF THE DRAWINGS

Fig. 1 is a block diagram showing a hardware structure according to a first mode of implementation of the present invention;
Fig. 2 is a block diagram showing a functional structure of an operating system according to the first mode of implementation of the present invention;
Fig. 3 is a diagram showing relation in each data among an application, a program storing unit and an address range set storing unit according to the first mode of implementation of the present invention;
Fig. 4 is a flow chart for use in explaining operation of the operating system at the start of an application program according to the first mode of implementation of the present invention;
Fig. 5 is a flow chart for use in explaining operation executed when the application program requests the operating system to execute processing according to the first mode of implementation of the present invention;
Fig. 6 is a flow chart for use in explaining operation of the operating system at the end of a task according to the first mode of implementation of the present invention;
Fig. 7 is a flow chart for use in explaining operation executed when the application program requests the operating system to execute processing according to a second mode of implementation of the present invention;
Fig. 8 is a flow chart for use in explaining operation of the operating system at the end of a task according to the second mode of implementation of the present invention;
Fig. 9 is a block diagram showing a functional structure of an operating system according to a third mode of implementation of the present invention;
Fig. 10 is a block diagram showing a hardware structure of an exemplary embodiment of the present invention;
Fig. 11 is a block diagram showing a functional structure of an operating system according to the exemplary embodiment of the present invention;
Fig. 12 is a diagram showing an example of contents of an address range set according to the exemplary embodiment of the present invention;
Fig. 13 is a flow chart for use in explaining operation at the start of an application program according to the exemplary embodiment of the present invention;
Fig. 14 is a flow chart for use in explaining operation to be executed when the application program requests the operating system to execute processing according to the exemplary embodiment of the present invention; and
Fig. 15 is a flow chart for use in explaining operation of the operating system at the end of a task according to the exemplary embodiment of the present invention.

### EXEMPLARY EMBODIMENT

Next, modes for implementing the present invention will be detailed with reference to the drawings.

### (FIRST MODE OF IMPLEMENTATION)

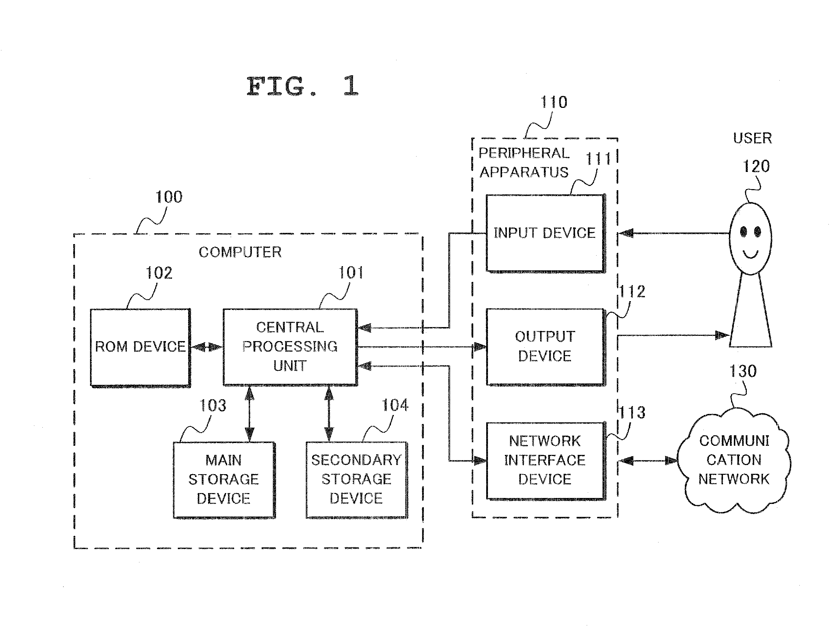

With reference to Fig. 1, a first mode of implementation of the present invention comprises a computer 100.

The computer 100 comprises a central processing unit 101 operable under the control of a program, a ROM device 102 for permanently storing a program (initial program) for controlling the central processing unit 101 immediately after power application to the computer 100, a main storage device 103 for temporarily storing the program which controls the central processing unit 101 and data processed by the program, and a secondary storage device 104 for permanently storing the program for controlling the central processing unit 101 and data to be processed by the program.

While the programs stored in the ROM device 102 and the main storage device 103 are executable on the central processing unit 101 without requiring any processing, the program stored in the secondary storage device 104 is not executable without any processing on the central processing unit 101 and becomes executable first upon loading on the main storage device 103.

The computer 100 is connected to a peripheral apparatus 110. The peripheral apparatus is not essential and its structure is changeable as required.

Among examples of components of the peripheral apparatus 110 are an input device 111 whose representative is a keyboard or a mouse which accepts input from a user 120, an output device 112 whose representative is a display device which outputs information to a user and a network interface device 113 which communicates through a communication network 130 as those shown in the figure.

Outlines of operation of each of the above-described components are as follows.

The central processing unit 101 first executes the initial program stored in the ROM device 102. By the execution of the initial program, the operating system stored in the secondary storage device 104 is loaded onto the main storage device 103 and brought to be executable by the central processing unit 101.

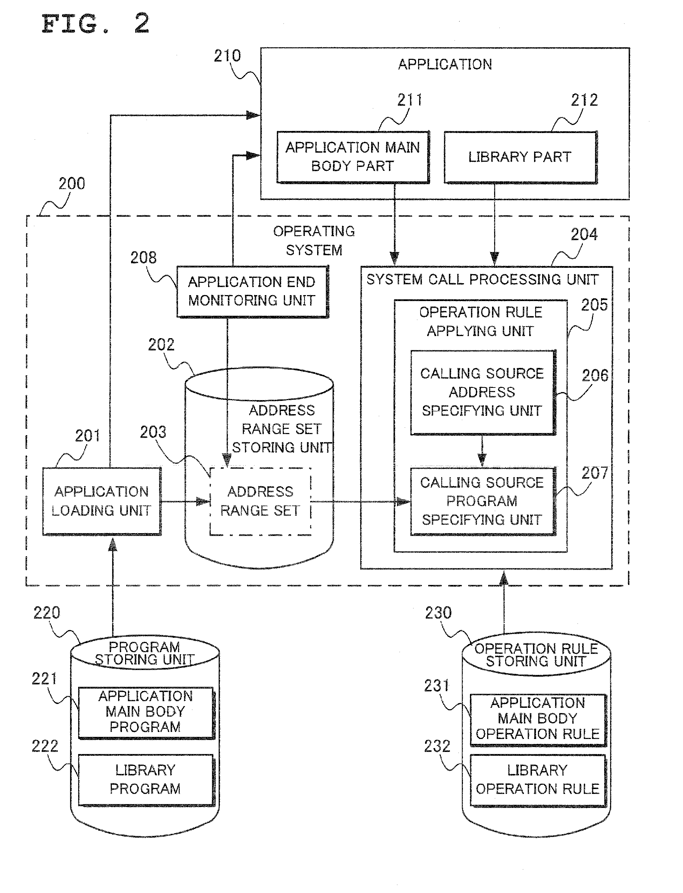

Outlines of the following operation will be described with reference to Fig. 2.

Fig. 2 is a block diagram showing a functional structure of the present invention which is realized by operating the operating system on the computer 100 to further operate the application program under the management of the operating system.

An operating system 200 is formed as software to be executed on the central processing unit 101 and provides a basic function necessary for the operation of an application 210.

Although the basic function here widely ranges from processing such as file open, close, seek, read and write to the control of the peripheral apparatus 110 connected to the computer 100, no detailed description will be made thereof because they are known to those skilled in the art.

The application 210 is formed as software to be executed on the central processing unit 101 and attains a desired object by using the basic function provided by the operating system 200 through a system call processing unit 204.

A program storing unit 220, which realizes a function for the operating system 200 to manage data write to and read from the secondary storage device 104 (often called a file system), operates to store a program in which operation of the application 210 is described.

An operation rule storing unit 230, which realizes a function for the operating system 200 to manage data write to and read from the secondary storage device 104, stores an operation rule to be observed when the application 210 operates on a basis of an individual program forming the application 210.

Operation rule here is description of a list of resources (a list of files from/to which read/write is allowed) that each part (main body part, each library part) forming the application 210 can use and an upper limit and a lower limit of the amount of usable resources (CPU occupation time, capacity of the main storage device, capacity of the secondary storage device, etc). Operation rule is called policy in some cases.

When using resources, the application 210 is assumed to access a resource through the operating system 200. Although there exists here such an operating system whose resource management is not strict as enables an access to a resource without intervention of the operating system,'in such a case, it is assumed that as to a resource accessible without intervention of the operating system, no operation rule can be described.

An application loading unit 201, which is formed as a software module in the operating system 200, operates to bring the application 210 to an effective state by appropriately loading a program forming the application 210 onto the main storage device 103 to cause the program to be executable on the central processing unit 101.

The program in which operation of the application 210 is described may be one in some cases but majority of current application programs is formed of a plurality of programs (one application main body part 211 and one or more library part 212).

Library program here is often used in common by a plurality of application programs and such a library program is called a shared library.

In addition, the application loading unit 201 operates, as internal operation attendant on the above-described loading operation, to register an address range obtained when loading the application main body part 211 in which the application 210 is described and the library part 212 onto the main storage device 103 as an address range set related to the application main body part 211 and the library part 212 and store the same in an address range set storing unit 202.

Address range here is data defined for each individual program, which is a set of an ID value for uniquely identifying a program and an upper value and a lower value of an address at which the program is loaded.

Address range set is a set of an ID value of the application 210 and an address range of each of all the programs forming the application main body part 211 and the library part 212.

Most preferable as an ID value of the application 210 is a task ID or a process ID which is a unit for the operating system 200 to manage the application 210.

As a program ID value, a file name of a program can be used.

The address range set storing unit 202, which is realized as a function for the operating system 200 to manage read and write from/to a part of the main storage device 103, operates to store an address range set 203 including an address range of the application main body part 211 and the library part 212 designated by the application loading unit 201.

Furthermore, the individual address range set 203 is read by a calling source program specifying unit 207 which will be described later.

In addition, the individual address range set 203 is erased by an application end monitoring unit 208 as required which will be described later.

The system call processing unit 204, which is formed as a software module in the operating system 200, operates to receive a processing request from the application 210 and execute a basic function that the operating system 200 has in response to a processing request.

The system call is in some cases called API or service call.

The above-described use of a resource from the application program is executed through the above-described system call processing unit 204.

The system call processing unit 204, in response to a processing request from the application 210, here operates not to always execute the basic function that the operating system 200 has but to refuse a processing request depending on circumstances. Determination whether to accept or refuse a processing request is made by an operation rule applying unit 205.

The operation rule applying unit 205, which is formed as a software module in the system call processing unit 204, has a calling source address specifying unit 206 and the calling source program specifying unit 207.

The operation rule applying unit 205 operates to read an operation rule stored in the operation rule storing unit 230 and determine whether to receive or refuse a processing request from the application 210 according to the operation rule.

At this time, the operation rule applying unit 205 operates to specify an address of a processing request generating source by the calling source address specifying unit 206 and specifies a program corresponding to the address by the calling source program specifying unit 207 to specify an operation rule to be applied in response to the processing request.

The application end monitoring unit 208, which is formed as a software module in the operating system 200, operates to monitor the.application 210 and upon completion of the operation of the application 210, erase the application 210 from the main storage device 103 and further delete the corresponding address range set 203 of the application 210 from the address range set storing unit 202.

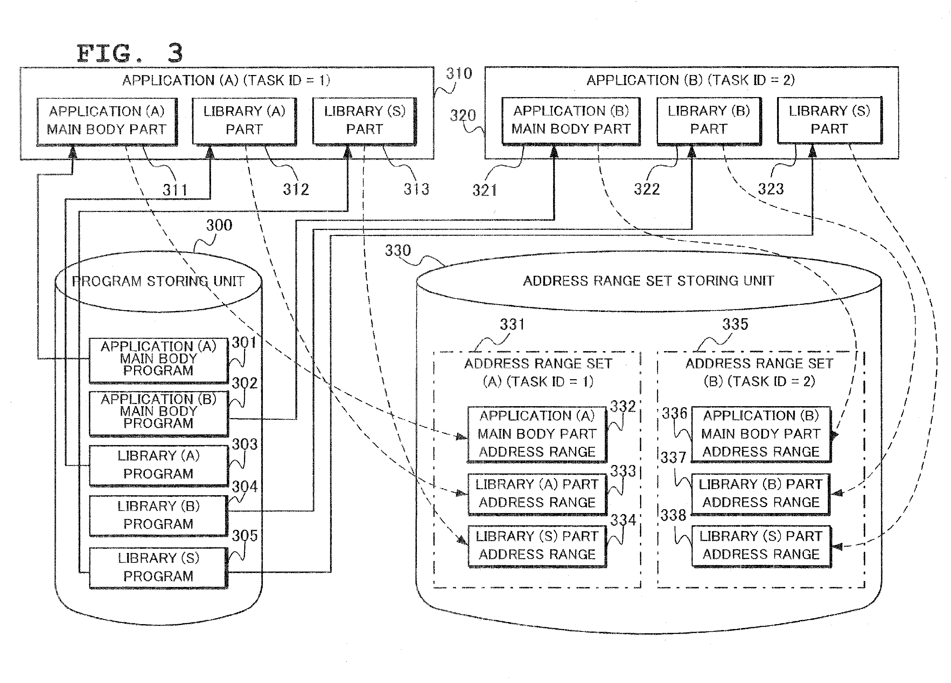

With reference to Fig. 3, an address range set will be described in more detail.

Some operating systems comprise a function of bringing a plurality of application programs to an effective state at a certain point. An operating system having such a function is referred to as a multi-task operating system. The multi-task operating system is a technique known to those skilled in the art and no detailed description will be therefore made thereof.

When the operating system 200 is a multi-task operating system, a plurality of application programs are brought to be located on the main storage device 103 at a certain time point.

Therefore, the address range set 203 needs to be generated for each of the plurality of application programs and stored.

Fig. 3 here is a block diagram showing a state where an application (A) 310 and an application (B) 320 are effective on the multi-task operating system.

The application (A) 310, which is formed of an application (A) main body part 311, a library (A) part 312 and a library (S) part 313, is managed by the multi-task operating system with a task ID = 1 assigned.

The application (B) 320, which is formed of an application (B) main body part 321, a library (B) part 322 and a library (S) part 323, is managed by the multi-task operating system with a task ID = 2 assigned.

Here, the library (S) part 323 is a shared library.

A program storing unit 300 stores each program set forth below:
(1) application (A) main body program 301,
(2) application (B) main body program 302,
(3) library (A) program 303,
(4) library (B) program 304,
(5) library (S) program 305.

These programs are loaded as shown in Fig. 3 to be a part of each application.

An address range set storing unit 330 individually stores an address range set as to each application, with a task ID as a key value.

This enables the multi-task operating system to validate a plurality of application programs, as well as enabling the same to cope with a shared library (library program).

Although the shared library conceptually behaves in the same manner as that of a case where it is loaded into the application (A) 310 and the application (B) 320, the shared library (library program) existing on the main storage device 103 is single.

Storage in combination with a task ID, however, allows the calling source program specifying unit 207 to determine a processing request generating source properly.

Next, operation of the first mode of implementation of the present invention will be described with reference to the drawings.

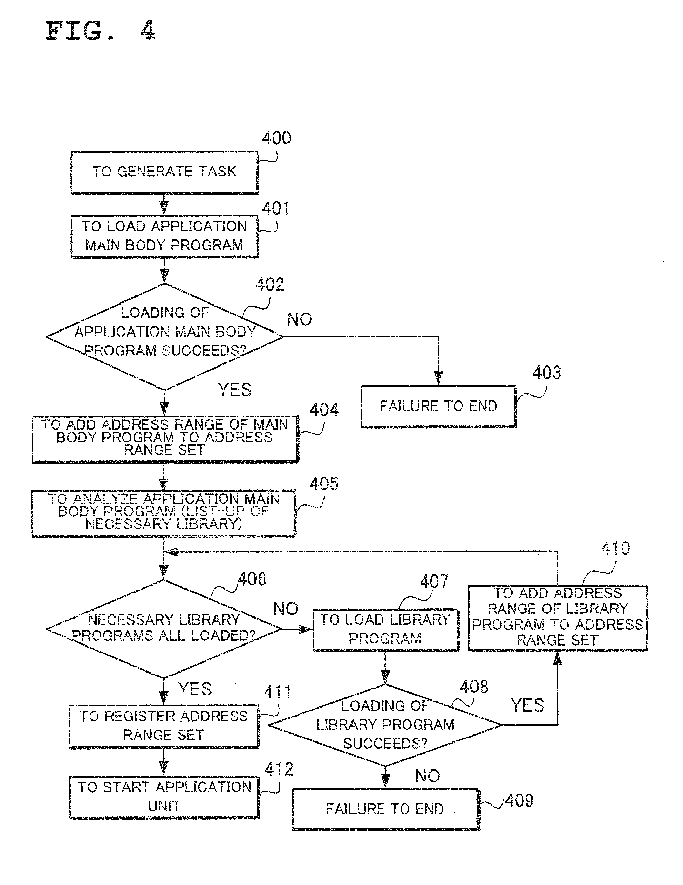

With reference to Fig. 4, start-up of the application program will be described.

First, the operating system 200 generates a task as an operation unit of the application program (Step 400).

Next, the application loading unit 201 in the operating system 200 loads the application main body program (Step 401). Here, when loading fails because no application main body program is found or for other reason (Step 402), start-up of the application program fails to end (Step 403).

The application loading unit 201 generates the address range set 203 for the application program and sets a task ID at the address range set 203 to add an address range of the application main body program to the address range set (Step 404).

The application loading unit 201 analyzes the application main body program to list up a necessary library program (Step 405).

Here, a list of necessary library programs is recorded in the application main body program at the time of generating the application main body program. Although the recording method differs with a format of a file (e.g. AOUT format, ELF format) of the application main body program, since they are known to those skilled in the art, no detailed description will be made thereof.

The application loading unit 201 executes loading processing until all the necessary library programs are loaded (Steps 406, 407 and 408).

The application loading unit 201 also adds an address range of the loaded library program to the address range set (Step 410).

When loading of the library program fails because no necessary library is found (because for some mistake or another, it fails to exist in the program storing unit, or for other reason) (Step 408), application program staring processing fails to end (Step 409).

The application loading unit 201 records, as the address range set 203, address ranges and program IDs (a file name is preferably used as described above) of the loaded application main body program and library program so as to be paired with the task ID (Step 411).

After all the work is completed, the operating system 200 starts processing of the application program (Step 412).

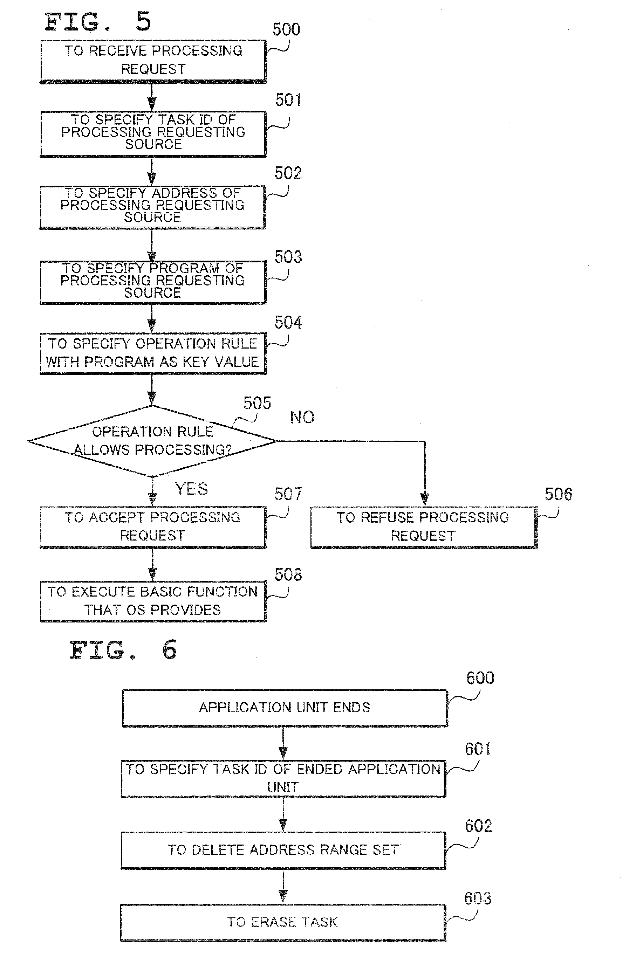

With reference to Fig. 5, description will be made of operation to be executed when a processing request is made from the application program to the operating system 200.

Upon receiving a processing request from the application program, the operating system 200 starts processing of the system call by the system call processing unit 204 (Step 500).

The operating system 200 specifies a task ID of a processing requesting source (Step 501). Because the operating system 200 manages a task, specifying a task ID is possible.

In a certain operating system, for example, all the tasks are managed in a data structure called "task management structure" and with a task being currently executed as a "current task", an address of the task structure of the current task is stored. Since a task making a processing request is a task in execution, a task ID can be found by checking an ID value in the task structure of the current task.

Although a method of specifying a task ID of a processing requesting source depends on an individual operating system mounting form and may be different from the above-described method, since it is known to those skilled in the art, no detailed description will be made thereof.

The operating system 200 specifies an address of the processing requesting source by the calling source address specifying unit 206 of the operation rule applying unit 205 (Step 502).

When the processing request is made by so-called "function calling", since an address of a calling source is preserved in a call stack of the function, it is possible to specify an address of the processing requesting source.

When the processing request is made by so-called "software interruption", since an address which causes the software interruption is automatically saved into a stack by the function of the CPU, checking a value in the stack enables an address of a processing requesting source to be specified.

Although there is a case where a name indicating an address varies with a kind of CPU such as "instruction pointer" or "program counter", or where the term "software interruption" is called "exception" in some of CPUs, since it is known to those skilled in the art and a processing method has no difference, no detailed description will be made thereof.

In addition, although depending on a kind of CPU, there is a case where an address causing an interruption is not saved into a stack but saved into a saving register, in such a case, checking a value in the saving register similarly enables a processing requesting source address to be specified. This is known to those skilled in the art and therefore no detailed description will be made thereof.

The operating system 200 specifies a program of the above-described processing requesting source by using the calling source program specifying unit 207 based on the task ID of the processing requesting source and an address of the processing requesting source (Step 503).

In the specification of the program, first, search for an address range set with a task ID of the processing requesting source as a key value (that is, specify an address range set having a task ID equal to a key value from the address range set storing unit 202).

Next, from the above-described specified address range set, specify a program which includes the processing requesting source address in the address range. This leads to specifying a program of the processing requesting source.

The operating system 200 searches the operation rule storing unit 230 by the operation rule applying unit 205 with the above-described specified program as a key value to specify an operation rule (Step 504).

Since operation rules are stored with a program as a key value, it is possible to specify an operation rule to be applied by search.

As described above, described in the operation rule are a list of usable resources and an upper limit and a lower limit of the amount of usable resources.

The operating system 200 compares the above-described operation rule specified and the contents of the processing request by the operation rule applying unit 205 to determine whether to allow processing (Step 505).

When the determination on allowance/non-allowance of the processing results in non-allowance, the operating system 200 refuses the processing request (Step 506).

When the determination on allowance/non-allowance of processing results in allowance, the operating system 200 accepts the processing request (Step 507).

The operating system 200 executes a basic function corresponding to the accepted processing request among the basic functions that the operating system 200 has (Step 508).

With reference to Fig. 6, operation at the time of task end will be described.

The operating system 200 detects the end of the application 210 by the application end monitoring unit 208 (Step 600).

Here, possible castes of the end of the application 210 are 1) where the application 210 declares by itself the end of the processing to the operating system 200 and 2) where the operating system 200 senses abnormal operation of the application 210 to result in forcibly ending the application 210 by the operating system 200.

In a case of 1), the operating system 200 is allowed to sense the end by the declaration by the application 210. It is a common practice that this declaration is made by a processing request through the system call. Since technical contents thereof are known to those skilled in the art, no detailed description will be made thereof .

In a case of 2), since the operating system 200 ends the application 210 by itself, it is allowed to detect the end of the application 210. Here, among possible as abnormality detection are violation of a memory access by the application 210 and a processing request violating the above-described operation rules caused by a memory management unit built in CPU. Since abnormality detection has a wide range of kinds and they are known to those skilled in the art, no further detailed description will be made thereof.

The operating system 200 specifies a task ID of the ended application 210 by the application end monitoring unit 208 (Step 601).

Since the operating system 200 manages a task, it is allowed to specify a task ID of the application 210. In either of a case where the application 210 declares the end to the operating system 200 by itself and a case where the application 210 ends abnormally, a task ID of a task being currently executed (so-called current task) that the operating system 200 manages can be considered as a task ID of the ended application 210. Since technical contents thereof are known to those skilled in the art, no further detailed description will be made thereof.

With the task ID of the ended application 210 as a key value, the application end monitoring unit 208 of the operating system 200 specifies a corresponding address range set 203 and deletes the address range set from the address range set storing unit 202 (Step 602).

The operating system 200 erases the task of the ended application 210 (Step 603). Although this processing includes such processing as erasure of the above-described task structure, since processing contents vary with each kind of the operating system 200 and they are known to those skilled in the art, no further detailed description will be made thereof.

As described above, the operating system according to the present mode of implementation enables an operation rule for the application main body program and an operation rule for the library program to be appropriately applied to an application program by individually storing, in the operation rule storing unit 230, an application main body operation rule 231 for the application main body program and a library operation rule 232 for the library program, storing, in the address range set storing unit 202, an address range set including address ranges in which the application main body program and the library program are loaded at the time of starting the application program and specifying a task ID and an address of a system call processing request generating source to determine an operation rule to be applied.

In the operating system according to the present invention, every time a program forming the application is loaded into the main storage device 103, an address range of the loaded program changes. Therefore, an address range and an ID of the loaded program are paired as an address range set and stored at every loading.

In addition, loading of a program into the main storage device 103 in the present mode of implementation is application starting operation executed every time the computer 100 is started, and at the time of starting the application, an operation rule specified based on an address range set of the program is applied.

### (SECOND MODE OF IMPLEMENTATION)

Second mode of implementation of the present invention will be described.

While in the first mode of implementation of the present invention, the description has been made premised on an operating system for a so-called multi-task, the present invention is also applicable to an operating system for a single-task.

Since a system structure and a functional structure of an operating system are the same as those of the first mode of implementation shown in Fig. 2 and Fig. 3, no description will be here made thereof.

For applying the present invention to an operating system for a single-task, because only one application program is effective at each time point, no task ID exists.

Therefore, the address range set 203 includes no task ID value and there will exist in the address range set storing unit 202 only one address range set at each time point.

In this case, in the operation of specifying a processing requesting source program, it is enough to know only a processing requesting source address.

In the present mode of implementation, only the difference is that no task ID is set for each application in the address range set 203 and operation of starting the application program is the same as that of the first mode of implementation shown in Fig. 4.

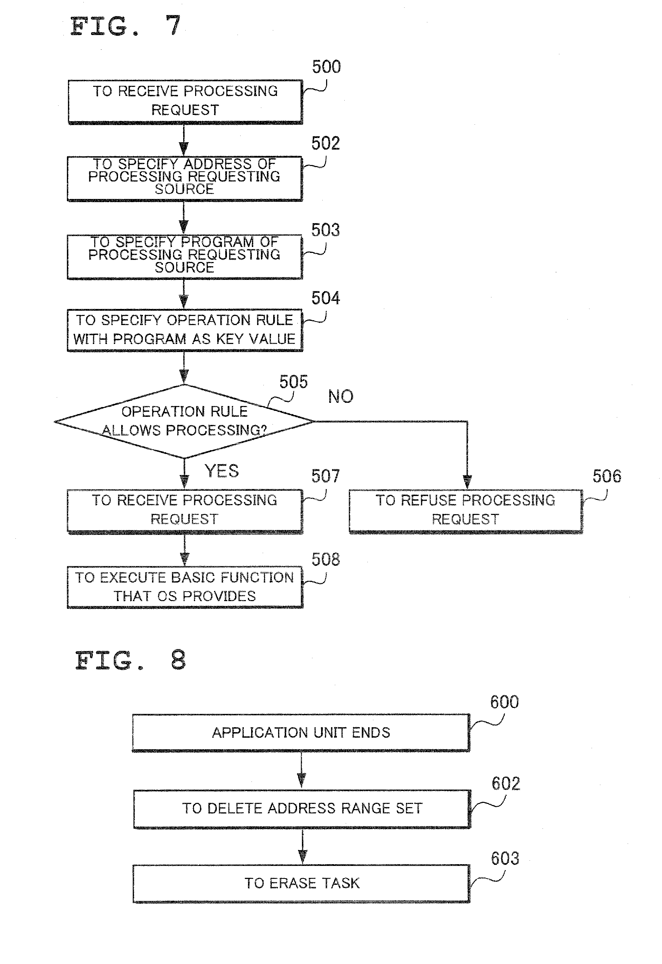

In addition, the operation to be executed when a processing request is made from the application program to the operating system 200 has only the difference, as shown in the flow chart of Fig. 7, that the processing for specifying a task ID of a processing requesting source executed by the operating system 200 at Step 501 in Fig. 5 which shows operation of the first mode of implementation is omitted, and the following processing (Steps 502 through 508) is the same as that of the first mode of implementation.

Furthermore, as to operation at the time of task ending, as shown in the flow chart of Fig. 8, only the difference is that the processing of specifying a task ID of the ended application 210 by the operating system 200 at Step 601 according to the first mode of implementation shown in Fig. 6 is omitted, and the remaining processing (Steps 602 and 603) is the same as that of the first mode of implementation.

### (THIRD MODE OF IMPLEMENTATION)

Third mode of implementation of the present invention will be described.

While in the first mode of implementation, the application main body program 221 and the library program 222 are loaded at the time of starting the application program, some kind of operating system 200 may have a function of loading the library program 222 while the application program is executed after it is started.

Library program thus loaded while the application program is executed is referred to as a dynamic link library.

The third mode of implementation of the present invention enables an individually described operation rule to be applied to such a dynamic link library.

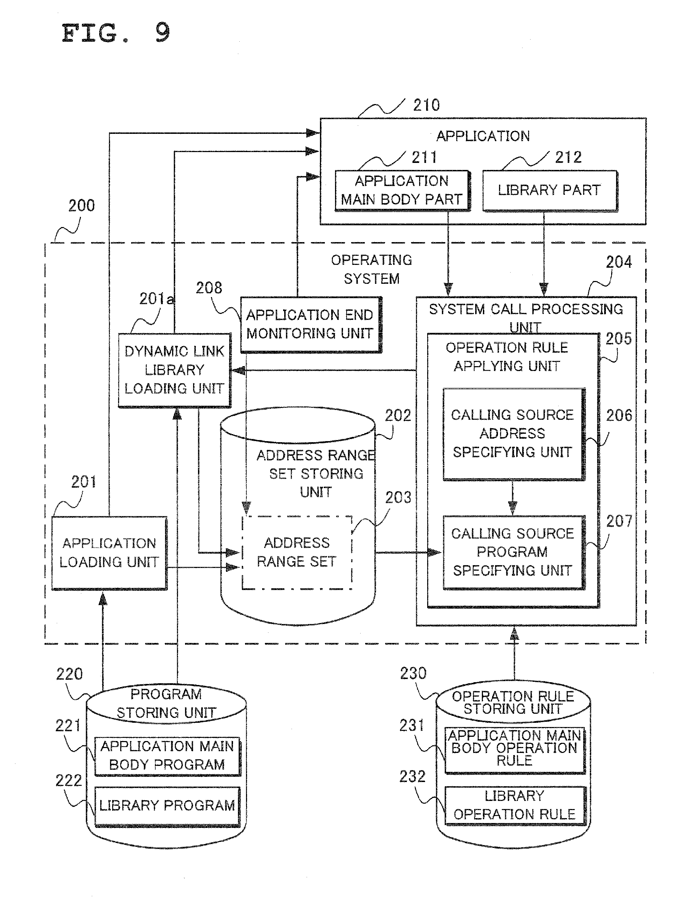

Fig. 9 is a block diagram showing an example of a functional structure of the operating system 200 according to the third mode of implementation.

For loading a dynamic link library, when the application program in execution issues a system call processing request to the operating system, a dynamic link library loading unit 201a loads a dynamic link library (a library program 222). Depending on a kind of operating system, the dynamic link library loading unit 201a and the application loading unit 201 may be here formed as different software modules as shown in Fig. 9, or the application loading unit 201 serves as the dynamic link library loading unit 201a as well.

At the time of loading, the dynamic link library loading unit 201a specifies an address range set of an application program of a processing request issuing source with a task ID of the application program as a key value and adds an address range in which the dynamic link library is loaded (including upper limit and lower limit address values and a program ID) to the address range set 203 to write the obtained result back to the address range set storing unit 202.

As shown in the third mode of implementation, the present invention is also applicable to an operating system having a function of loading a dynamic link library.

### (FOURTH MODE OF IMPLEMENTATION)

Fourth mode of implementation of the present invention will be described.

While in the first mode of implementation of the present invention, operation rules are described individually for the application main body program and the library program, in which operation rules, a kind of resource which can be used and an upper limit and a lower limit of the amount of resources which can be used are described, the fourth mode of implementation is structured to allow, in addition to the operation rule description manner of the first mode of implementation, description of an operation rule whose content is "conformed to an operation rule of the application main body program" as a manner of describing the library operation rule 232 of the library program.

Since a system structure and a functional structure of the operating system are the same as those of the first mode of implementation shown in Fig. 2 and Fig. 3, no description will be made thereof.

The fourth mode of implementation is also useful in operation rule description as to a common shared library.

In the library program 222 mounted with a C language standard function group (so-called libc) or the like, for example, since it is a general-purpose library program, it has a wide range of both kinds and amounts of usable resources. When an operation rule allowing every operation is described, operation of an application program using a library program cannot be limited, which allows an application program using a library program to execute any operation.

In a case where an operation rule that allows not every operation is described as an operation rule of a library program, however, an application program failing to have normal operation might be generated.

Accordingly, as the library operation rule 232 of the library program 222 (e.g. libc), describing an operation rule "conformed to an operation rule of the application main body program 221" enables a library program (e.g. libc) to be handled integrally with the application main body program in terms of an operation rule to allow description of an operation rule appropriate for an individual application program without damaging universality of the library program (e.g. libc).

### (FIFTH MODE OF IMPLEMENTATION)

Fifth mode of implementation of the present invention will be described.

While in the first mode of implementation of the present invention, the program storing unit 220 and the operation rule storing unit 230 are structured to be individual units, they may be formed as a general-purpose storage unit which is capable of storing both a program and an operation rule. In a case, for example, where a program and an operation rule are managed as a file, it is natural to store a program and an operation rule on one file system like this.

In addition, a program (the application main body program 221 and the library program 222) and an operation rule (the application main body operation rule 231 and the library operation rule 232) to be paired with the program can be stored integrally. In other words, the program file (the application main body program 221 and the library program 222) may be managed as one file with the operation rule (the application main body operation rule 231 and the library operation rule 232) included.

### (EXEMPLARY EMBODIMENT)

Specific exemplary embodiment of the present invention will be described.

Shown in the present exemplary embodiment is an example where the present invention is applied to an operating system compliant to POSIX or similar to UNIX (registered trademark) approximate to the same which is installed on a PC (computer) 700.

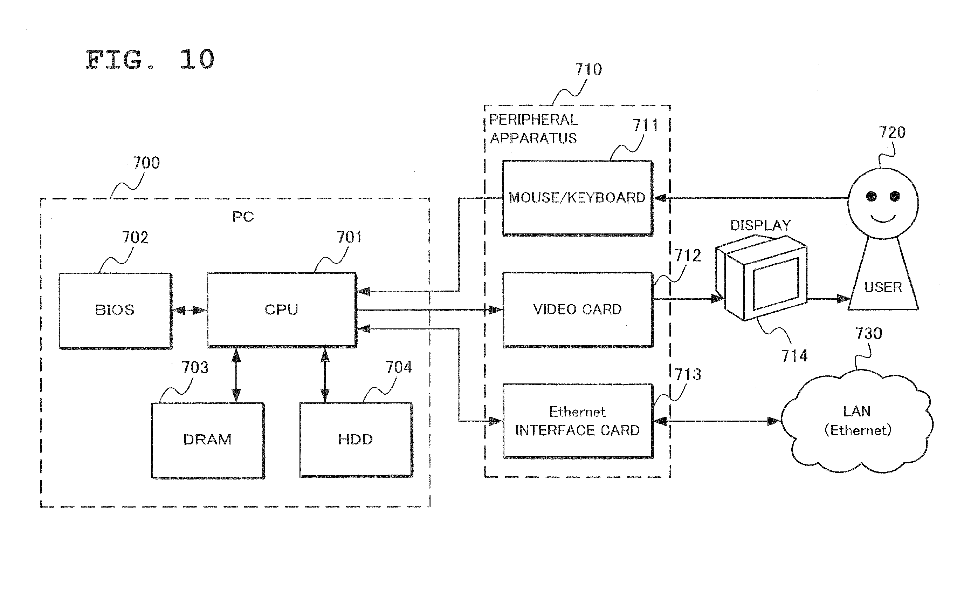

With reference to Fig. 10, a hardware structure of the present exemplary embodiment will be described.

The PC 700 comprises a CPU (central processing unit) 701, a BIOS (ROM device) 702, a DRAM (main storage device) 703, and an HDD (secondary storage device) 704 and has, as a peripheral apparatus 710, a mouse/keyboard (input device) 711, a video card (output device) 712 and an Ethernet (registered trademark) interface card (network interface device) 713 connected.

To the video card, a display 714 is connected to enable an image from the PC 700 to be output.

In addition, the Ethernet (registered trademark) interface card 713 is connected to a LAN 730 to enable the PC 700 to communicate through the LAN 730.

A user 720 operates the PC 700 through the mouse/keyboard 711 to confirm an operation result through the display 714.

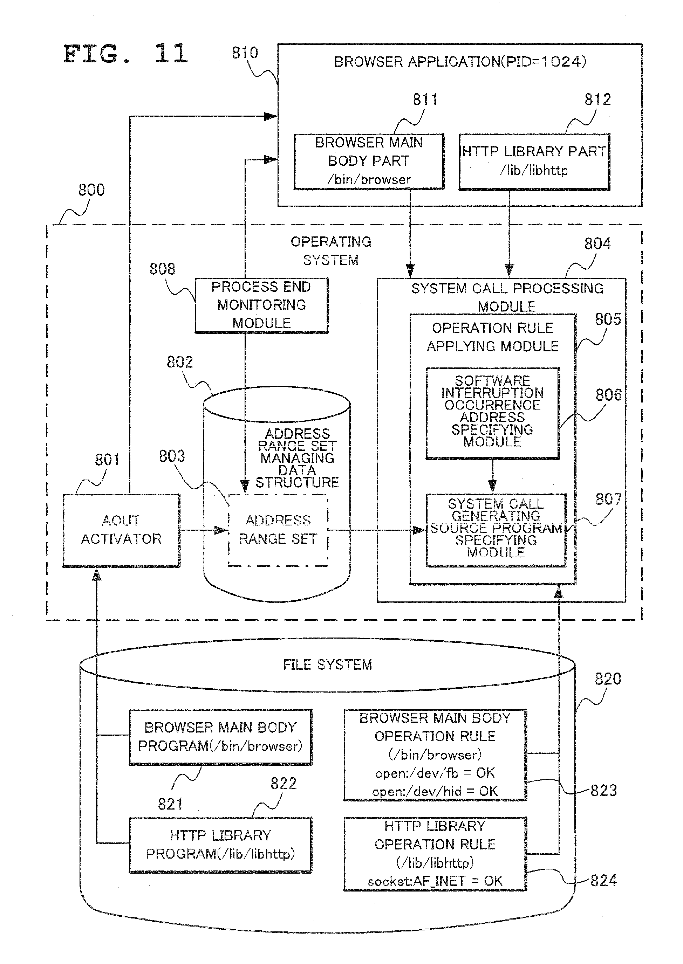

Fig. 11 shows a functional structure of an operating system 800 according to the present exemplary embodiment.

The operating system 800, which is stored in the HDD 704, is loaded onto the DRAM 703 by the execution of an initialization routine stored in the BIOS 702 at the time of starting the PC 700. After loading, the operating system 800 operates as basic software which manages the PC 700.

The operating system 800 comprises an AOUT activator 801 for executing a program of the AOUT format, an address range set managing data structure 802 which is an address range set storing unit for storing an address range set 803, a system call processing module 804 for executing processing of a system call, and a process end monitoring module 808 for monitoring end of a process.

The system call processing module 804 comprises an operation rule applying module 805 as a sub module, which operation rule applying module further comprises a software interruption occurrence address specifying module 806 and a system call generating source program specifying module 807 as sub modules.

The software interruption occurrence address specifying module 806 has a function of specifying a system call generating source address from a software interruption occurrence source address.

The system call generating source program specifying module 807 has a function of searching the address range set managing data structure 802 with a process ID as a key value to specify an address range set and comparing each address range in the obtained address range set and a system call generating source address to determine a system call generating source program.

The operation rule applying module 805 applies an operation rule corresponding to a generating source program of a system call to determine whether to allow processing of the system call.

The operating system similar to UNIX (registered trademark) recited in the present exemplary embodiment in general has a virtual storage function. In this case, the operating system manages two kinds of addresses as an address, a virtual address and a real address (physical address) and exchanges them with each other. Since virtual storage is known to those skilled in the art, no further detailed description will be made thereof, and an address in the present exemplary embodiment is assumed to represent a virtual address unless otherwise noted.

The reason why a virtual address is observed is that when a real address is used as an address at which a program is located, the address might change during execution of the program due to swapping operation, for example, while no virtual address will change.

It is necessary in the operation of the present exemplary embodiment that in the processing of comparing an address range and a system call generating source address, an address at which a program is located will have no change from the start until the end of an application program.

The address range set managing data structure 802 is formed as a data structure which enables an address range set to be specified with PID as a key value. As one example, possible is to form a binary tree data structure with PID as a key value on the DRAM 703.

Shown is a case where as an example of an application, a Web browser application (hereinafter, simply referred to as a browser application 810) is used.

The browser application 810 is formed of a browser main body part 811 and an HTTP library part 812.

The HTTP library part 812 provides the browser main body part 811 with a function of obtaining Web page description data through a communication network by executing communication conformed to HTTP.

The browser main body part 811 has a function of displaying a Web page on the display 714 according to Web page description data. The browser application 810 has a function of receiving operation executed by the user 720 through the mouse/keyboard 711 to ask the HTTP library part 812 to obtain description data of a Web page to be displayed next as required.

Program of the browser main body part 811 is a browser main body program 821 and an ID of the program is assumed to be a full path name of a file (/bin/browser)
in which the program is recorded.

The program of the HTTP library part 812 is an HTTP library program 822 and an ID of the program is assumed to be a full path name of a file (/lib/libhttp) in which the program is recorded.

Each program is formed to have the AOUT format and recorded on a file system 820. The file system 820 is realized by managing data read/write from/to the HDD 704 by the operating system 800.

Operation rule of the browser main body part 811 is a browser main body operation rule 823.

Operation rule of the HTTP library part 812 is an HTTP library operation rule 824.

Each operation rule is stored as a file on the file system 820.

In the present exemplary embodiment, described in the browser main body operation rule 823 is that an ID of the browser main body part 811 is a full path name (/bin/browser), and further described are contents for which the browser main body part 811 is allowed to output an image to the display 714 and the browser main body part 811 is allowed to receive input from the user 720 through the mouse/keyboard 711.

In the HTTP library operation rule 824, described is that an ID of the HTTP library part 812 is a full path name (lib/libhttp) and also described are the contents for which the HTTP library pat 812 is allowed to execute IP communication.

In the present exemplary embodiment, description will be made assuming that other operation not explicitly allowed than those described above is inhibited.

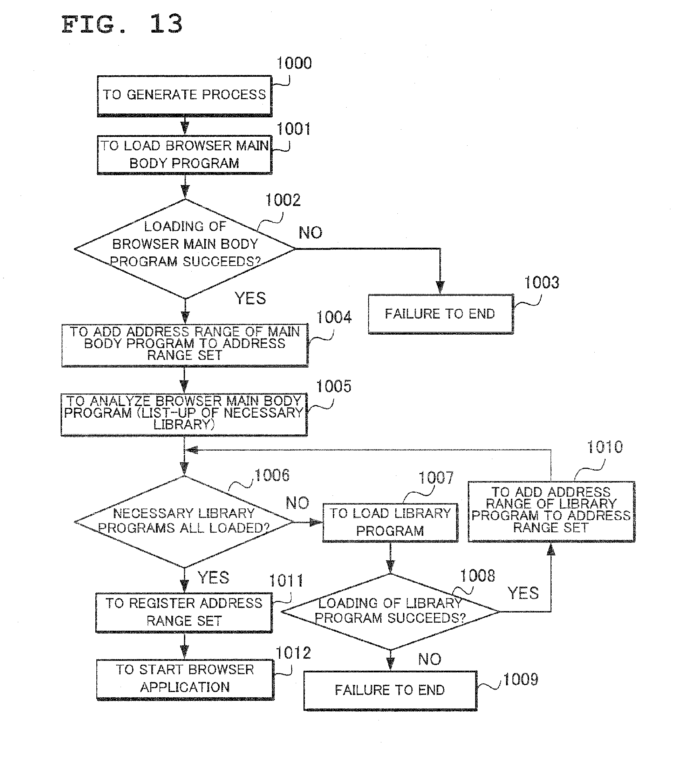

Next, operation of the present exemplary embodiment will be described with respect to Fig. 13, Fig. 14 and Fig. 15.

With reference to the flow chart in Fig. 13, processing of starting the browser application 810 will be described.

In the processing of starting the browser application 810, the operating system 800 first generates a process (Step 1000).

At this time, the operating system 800 allots PID (process ID) to the process as an ID value for management.

In the following, description will be made assuming that "1024" is allotted as PID.

Next, the operating system 800 loads the browser main body program 821 as an execution code of the process (PID = 1024) by using the AOUT activator 801 (Step 1001).

In the following, description will be made assuming that loading succeeds into a region from "0x8048000" to "0x080dc000" as an address value.

If loading of the browser main body program 821 fails, the failure leads to end without starting the browser application 810 (Steps 1002 and 1003).

The AOUT activator 801 generates the address range set 803 for the browser application 810 and sets "1024" as a PID to add an address range of the browser main body program 821 (Step 1004).

The AOUT activator 801 analyzes the browser main body program 821 to list up a necessary library program (Step 1005).

In the following, description will be made assuming that a library program necessary for the browser main body program 821 is the HTTP library part 812.

Since the browser main body program 821 needs the HTTP library part 812, the AOUT activator 801 additionally loads the HTTP library program 822 as an execution code of the process (PID = 1024) (Steps 1006, 1007 and 1008).

The AOUT activator 801 also adds the address range of the HTTP library program 822 to the address range set 803 (Step 1010).

In the following, description will be made assuming that loading succeeds into a region from "0x40016000" to "0x4001c000" as an address value.

If loading of the HTTP library program 822 fails, the failure leads to end without starting the browser application 810 (Step 1009).

The AOUT activator 801 registers the address range set 803 of the browser application 810 at the address range set managing data structure 802 (Step 1011).

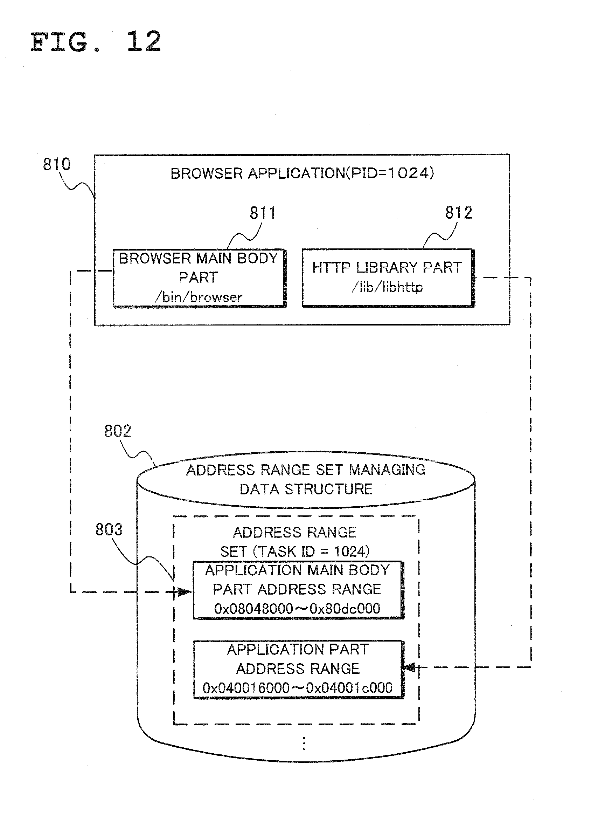

Here, as schematically illustrated in the address range set 803 shown in Fig. 12, details of the contents of the address range set 803 are that an address at which a program whose PID is 1024 and whose program ID is /bin/browser is loaded ranges from 0x08048000 to 0x080dc000 and that an address at which a program whose program ID is /lib/libhttp is loaded ranges from 0x040016000 to 0x4001c000.

After the loading of the program and the registration of the address range set, the AOUT activator 801 starts operation of the browser application 810 (Step 1012).

Since during.the operation, for as required using the basic function that the operating system 800 has, the browser application 810 calls up the system call.

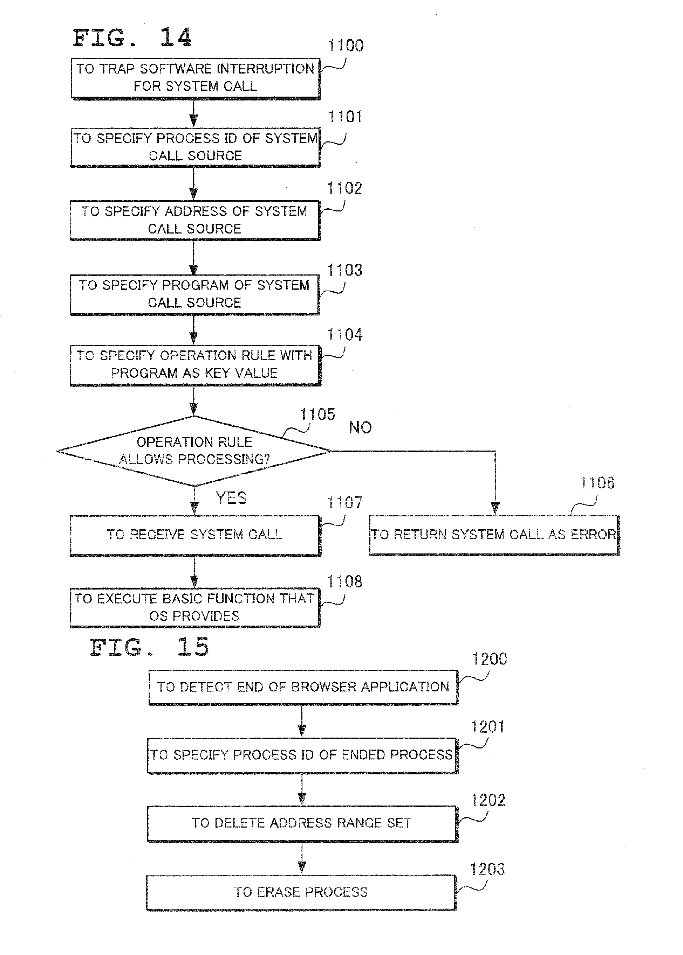

Operation executed when the browser application 810 calls the system call to the operating system 800 will be described with reference to Fig. 14.

This call-up is executed by generating a software interruption. When an interruption occurs, it is trapped by the operating system 800 to shift a processing execution point into the operating system 800. Since mounting a system call by a software interruption is known to those skilled in the art, no further detailed description will be made thereof.

By the system call call-up by the browser application 810, the operating system 800 traps the software interruption (Step 1100).

Next, the operating system 800 specifies a PID of the system call source (Step 1101).

Since the operating system 800 manages execution of a process, it is allowed to specify a PID of the system call source. In general, it is only necessary to consider a PID of a current process as a PID of a system call source.

Next, the operating system 800 specifies an address of the system call source by using the software interruption occurrence address specifying module 806 (Step 1102).

Address of a system call source here represents an address on a memory on which a software interruption instruction is placed.

When a software interruption occurs, the execution point of the CPU 701 shifts to a code for trap and at this time, the CPU 701 operates to save an execution point as of generation of the software interruption into a specific memory region (managed as a stack) which is designated in advance. This is the operation by the CPU in the present exemplary embodiment.

Therefore, the software interruption occurrence address specifying module 806 is allowed to specify an address of the system call source at the execution point saved.

Next, the operating system 800 specifies a program of the system call source by using the system call generating source program specifying module 807 (Step 1103).

Specifying the address range set 803 from the address range set managing data structure 802 with the PID as a key and further searching for a program whose loading range includes an address of the system call source from the address range set 803 leads to specifying a program of the system call source.

Next, the operating system 800 specifies an operation rule to be applied with the specified program as a key (Step 1104).

In the present exemplary embodiment, since an operation rule is preserved in the file system 820 in the form of a file, an operation rule to be applied can be specified by searching the file system 820 for a file of an operation rule including a full path name of a specified program.

Since data read/write from/to the HDD 704 is in general slower than read/write of data from/to the DRAM 703, reading all the operation rules on the file system 820 onto the DRAM 703 in advance enables speed-up of the processing of specifying an operation rule to be applied. As one example, possible is a method of calculating a hash value of a full path name as an ID of a program and reading a group of operation rules onto the DRAM 703 in the form of a hash table in advance.

Next, the operating system 800 compares the specified operation rule and the contents of the system call to determine whether to execute processing of the system call (Step 1105).

When the contents of the system call are explicitly allowed in the operation rule, receive the system call (Step 1107) to execute the basic function that operating system 800 has (Step 1108) and thereafter return to the browser application 810.

When the operation rule has no explicit allowance, since it is interpreted in the present exemplary embodiment that the relevant operation is inhibited, return the system call as an error (Step 1106).

Lastly, the operating system 800 senses the end of the browser application 810 by using the process end monitoring module 808 (step 1200).

In ordinary processing, the browser application 810 notifies the operating system 800 of the end by calling up an exit system call. In this case, the operating system 800 is allowed to sense the end of the browser application 810 in the form of system call call-up.

There is also a case where the browser application 810 executes dangerous operation as abnormal processing and is forcibly ended by the operating system 800. One example of dangerous operations is memory protection violation.

In this case, trapping an interruption from a memory management unit by the operating system 800 enables the operating system 800 to sense dangerous operation of the browser application 810, which can replace detection of the end of the browser application 810.

Other dangerous operation (e.g. execution of a privileged instruction at a non-privileged state) can be sensed also as an interruption, so that the operating system 800 is allowed to sense the end of the browser application 810. Since these are known to those skilled in the art, no detailed description will be made thereof.

With reference to Fig. 15, operation executed at the end of a process will be described.

Upon sensing the end of a process, the operating system 800 specifies a process ID of the ended process (Step 1201).

Then, with the specified process ID as a key value, specify the address range set 803 of the ended process and delete the specified address range set 803 from the address range set managing data structure 802 (Step 1202).

Furthermore, the operating system 800 erases the process itself (1203).

Although processing related to erasure of a process ranges widely from processing of erasing the process managing data structure 802 to processing of changing a physical memory assigned to a process into a memory to be handled as a memory yet to be assigned, since these are known to those skilled in the art, no detailed description will be made thereof.

In the above-described exemplary embodiment, consider, for example, operation of displaying an image onto the display by the browser main body part 811.

Since in an OS similar to UNIX (registered trademark) recited in the present exemplary embodiment, it is a common practice to abstract an access to such a peripheral apparatus as a display as an access to a device file, the browser main body part 811 will call up a system call to open a device file of /dev/fb in this case.

Then, an issuing source of the system call specified by the operating system 800 will have PID = 1024 and an address falling somewhere between "0x8048000" and "0x80dc000".

In the operation rule of the browser main body program 821 specified by the operating system 800 according to the above, described is to the effect that open of the device file (/dev/fb) is allowed.

Accordingly, the browser main body part 811 is allowed to display an image on the display (although in an ordinary case, not only open but also read, write and ioctl of the device file (/dev/fb) should be allowed, since its description will be complicated, it is omitted in the present exemplary embodiment).

Similarly, consider operation of receiving input from the user 720 through the keyboard/mouse 711 by the browser main body part 811.

Assuming that an access to the keyboard/mouse 711 is abstracted as an access to a file /dev/hid, because open to the file (/dev/hid) is allowed, the browser main body part 811 is allowed to receive input from the user 720 (although in an ordinary case, not only open but also read, write and ioctl of /dev/fb should be allowed, since its description will be complicated, it is omitted in the present exemplary embodiment).

As to operation executed by the browser main body part 811 for IP communication without intervention of the HTTP library part 821, however, the operation rule of the browser main body program 821 fails to have an explicit allowance related to call-up of a socket system call which designates an AF_INET domain.

Accordingly, IP communication by the browser main body part 811 without intervention of the HTTP library part 812 will be inhibited by the operating system 800.

Operation executed by the HTTP library part 812 for IP communication will be described as another example.

In an OS similar to UNIX (registered trademark) recited in the present exemplary embodiment, it is a common practice to call up a socket system call at the time of communication and it is also common to designate AF_INET as an argument of the socket system call at the time of IP communication.

In this case, in socket system call call-up from the HTTP library part 812, a system call calling source specified by the operating system 800 will have a PID = 1024 and an address falling somewhere between "0x40016000" and "0x4001c000".

In the operation rule of the HTTP library part 812 specified by the operating system 800 according to the above, described is to the effect that calling up a socket system call with AF_INET designated is allowed.

Accordingly, the HTTP library part 812 is allowed to execute IP communication.

Here, although the browser main body part 811 is not allowed to execute IP communication by itself, it is allowed to execute IP communication through the HTTP library part 812.

Therefore, executing sufficient quality examination in advance with respect to the HTTP library part 812 will guarantee quality of operation related to IP communication of the browser application 810. The reason is that the browser main body part 811 is not allowed to execute IP communication without intervention of the HTTP library part 812.

As described in the foregoing, according to the present exemplary embodiment of the present invention, in the application starting processing, the application loading unit for loading each program forming the application onto a memory stores, into the address range set storing unit, an address range on a memory (main storage device) into which one or more programs forming the application (application main body program, library program) are loaded and an identifier of the program as an address range set.

Upon acceptance of a system call call-up from an application by the system call processing unit, specify a task ID of a system call calling source program and specify an address of the calling source program by the calling source address specifying unit to specify a program as a processing requesting source by the calling source program specifying unit based on the task ID and the address.

Then, by the operation rule applying unit, specify an operation rule corresponding to the specified program and compare the specified operation rule and the contents of the called up contents to determine whether to execute the called up processing.

Although the present invention has been described with respect to the preferred modes of implementation and exemplary embodiment in the foregoing, the present invention is not necessarily limited to the above-described modes of implementation and exemplary embodiment and can be implemented in various forms without departing from the spirit and scope of its technical idea.

### INCORPORATION BY REFERENCE

The present application claims priority based on Japanese Patent Application No. 2007-040746, filed on February 21, 2007 and incorporates all the disclosure of the same.

### INDUSTRIAL APPLICABILITY

The present invention is applicable to such usage as a computer whose security is enhanced. Also applicable is to such usage as an incorporated apparatus including a computer whose security is enhanced.

## Claims

1. A computer, comprising:
an address range set storing unit for storing, as an address range set, an address on a memory into which at least one program forming an application is loaded so as to be correlated with said program;
an application loading unit having a function of loading each program forming the application into the memory and storing said address range set in the address range set storing unit in application starting processing;
a system call processing unit for executing various kinds of processing in response to a call-up of a system call from the application;
an operation rule storing unit for string an operation rule which describes allowance/non-allowance of use of a system call by a program forming the application; and
an operation rule applying unit for determining, based on said operation rule corresponding to a program of a calling source of a system call, whether to execute processing called up by said system call processing unit.

2. The computer according to claim 1, wherein a set of an upper limit value and a lower limit value of an address on a memory into which said program is loaded and an identifier of said program is stored as said address range set.

3. The computer according to claim 1 or claim 2, further comprising:
a calling source address specifying unit for specifying an address of a calling source of a system call in said operation rule applying unit; and
a calling source program specifying unit for comparing an address obtained by said calling source address specifying unit in said operation rule applying unit and an address range of each program in address range sets stored in said address range set storing unit to specify a program of a calling source of a system call.

4. The computer according to any one of claim 1 through claim 3, wherein described in said operation rule are an upper limit and a lower limit of an amount of usable resources for each program forming said application.

5. The computer according to any one of claim 1 through claim 4, comprising an application end monitoring unit for sensing an end of said application to delete said address range set of the ended application from said address range set storing unit.

6. The computer according to any one of claim 1 through claim 5, wherein
said address range set storing unit stores, with a task ID which uniquely identifies said application as a key value, address range sets of a plurality of applications, and
said calling source program specifying unit compares an address range of each program in an address range set specified from said address range set storing unit with said task ID as a key value and said calling source address to specify a program of a calling source of a system call.

7. The computer according to any one of claim 1 through claim 6, wherein said application loading unit, at the time of starting said application, after loading a program forming said application into a memory, additionally loads a program forming said application into the memory while said application is in execution and adds an address range of the additionally loaded program to said address range set.

8. The computer according to any one of claim 1 through claim 7, wherein
said operation rule storing unit further has a function of storing said operation rule including a description related to allowance/non-allowance of use of a system call based on a parameter to be handed over to the system call, and
said operation rule applying unit further includes a function of comparing a parameter handed over to a system call by said application with said operation rule to determine whether to allow execution of processing.

9. The computer according to any one of claim 1 through claim 8, wherein
said operation rule storing unit stores, with respect to at least one program among two or more programs forming the application, said operation rule including a description related to allowance/non-allowance of use of a system call and with respect to other program, designates an operation rule of other program including a description related to allowance/non-allowance of use of a system call and stores an operation rule describing to the effect that the designated operation rule of other program is conformed to, and
said operation rule applying unit further includes a function of designating an operation rule of other program as an operation rule corresponding to a program designated by said calling source program specifying unit and when the designated operation rule includes a description to the effect that the designated operation rule is conformed to, determining whether to allow processing of a system call according to the designated operation rule.

10. The computer according to claim 9, wherein
said application loading unit records an identifier of a program as a start point of execution of the application in an address range set, and
said operation rule applying unit further includes a function of, when an operation rule of a program has a description to the effect that an operation rule of a program as a start point of execution of the application is conformed to, obtaining an identifier of the program as a start point of the execution from said address range set, specifying an operation rule of the program as a start point of execution of the application by using the identifier of said program and applying the operation rule.

11. The computer according to any one of claim 1 through claim 10, comprising a virtual storage function, wherein a virtual address is used as said address.

12. The computer according to any one of claim 1 through claim 11, wherein a storage unit for integrally storing said program and said operation rule corresponding to the program in one file serves as a program storing unit for storing said program and as said operation rule storing unit for storing said operation rule.

13. The computer according to any one of claim 2 through claim 12, wherein as an identifier of a program, a path name of a file in which the program is stored is used.

14. An operation rule application method by an operating system, comprising:
in processing of loading each program forming an application into a memory, storing, as an address range set, an address on a memory into which each program forming the application is loaded in an address range set storing unit corresponding to said program; and
when executing various kinds of processing in response to a call-up of a system call from the application, selecting said operation rule corresponding to a program of a calling source of the system call from an operation rule storing unit for storing an operation rule which describes allowance/non-allowance of use of a system call on a basis of a program forming the application, and applying an operation rule to each program forming the application individually by determining whether to execute processing called up by said system call.

15. The operation rule application method according to claim 14, wherein a set of an upper limit value and a lower limit value of an address on a memory into which said program is loaded and an identifier of said program is stored as said address range set.

16. The operation rule application method according to claim 14 or claim 15, wherein
an address of a calling source of a system call and an address range of each program in address range sets stored in said address range set storing unit are compared to specify a program of the calling source of the system call.

17. The operation rule application method according to any one of claim 14 through claim 16, wherein described in said operation rule are an upper limit and a lower limit of an amount of usable resources for each program forming said application.

18. The operation rule application method according to any one of claim 14 through claim 17, comprising the step of sensing an end of said application to delete said address range set of the ended application from said address range set storing unit.

19. The operation rule application method according to any one of claim 14 through claim 18, wherein
with a task ID which uniquely identifies said application as a key value, address range sets of a plurality of applications are stored, and
an address range of each program in an address range set specified from said address range set storing unit with said task ID as a key value and said calling source address are compared to specify a program of a calling source of a system call.

20. The operation rule application method according to any one of claim 14 through claim 19, wherein at the time of starting said application, after loading a program forming said application into a memory, a program forming said application is additionally loaded into the memory while said application is in execution and an address range of the additionally loaded program is added to said address range set.

21. The operation rule application method according to any one of claim 14 through claim 20, wherein
said operation rule including a description related to allowance/non-allowance of use of a system call based on a parameter to be handed over to the system call is stored in said operation rule storing unit, and
said application compares a parameter handed over to a system call by said application with said operation rule to determine whether to allow execution of processing.

22. The operation rule application method according to any one of claim 14 through claim 21, wherein
in said operation rule storing unit, with respect to at least one program among two or more programs forming the application, said operation rule is stored which includes a description related to allowance/non-allowance of use of a system call and with respect to other program, an operation rule of other program including a description related to allowance/non-allowance of use of a system call is designated to store an operation rule which describes to the effect that the designated operation rule of other program is conformed to, and
an operation rule of other program is designated as an operation rule corresponding to a designated program and when the designated operation rule includes a description to the effect that the designated operation rule is conformed to, determination is made whether to allow processing of a system call according to the designated operation rule.

23. The operation rule application method according to claim 22, wherein
an identifier of a program as a start point of execution of the application is stored in said address range set, and
when an operation rule of said program has a description to the effect that an operation rule of the program as a start point of execution of the application is conformed to, an identifier of the program as a start point of the execution is obtained from said address range set to specify an operation rule of the program as a start point of execution of the application by using the identifier of said program and apply the operation rule.

24. The operation rule application method according to any one of claim 14 through claim 23, comprising a virtual storage function, wherein a virtual address is used as said address.

25. The operation rule application method according to any one of claim 14 through claim 24, wherein said program and said operation rule corresponding to the program are integrally stored in one file.

26. The operation rule application method according to any one of claim 15 through claim 25, wherein as an identifier of a program, a path name of a file in which the program is stored is used.

27. An operating system which causes a computer to execute processing of:
in processing of loading each program forming an application into a memory, storing, as an address range set, an address on a memory into which each program forming the application is loaded in an address range set storing unit corresponding to said program; and
when executing various kinds of processing in response to a call-up of a system call from the application, selecting said operation rule corresponding to a program of a calling source of the system call from an operation rule storing unit for storing an operation rule which describes allowance/non-allowance of use of a system call on a basis of a program forming the application, and applying an operation rule to each program forming the application individually by determining whether to execute processing called up by said system call.

28. The operating system according to claim 27, which causes a computer to execute processing of storing a set of an upper limit value and a lower limit value of an address on a memory into which said program is loaded and an identifier of said program as said address range set.

29. The operating system according to claim 27 or claim 28, which causes a computer to execute processing of comparing an address of a calling source of a system call and an address range of each program in address range sets stored in said address range set storing unit to specify a program of the calling source of the system call.

30. The operating system according to any one of claim 27 through claim 29, which causes a computer to execute processing of describing an upper limit and a lower limit of an amount of usable resources for each program forming said application in said operation rule.

31. The operating system according to any one of claim 27 through claim 30, which causes a computer to execute processing of sensing an end of said application to delete said address range set of the ended application from said address range set storing unit.

32. The operating system according to any one of claim 27 through claim 31, which causes a computer to execute processing of:
with a task ID which uniquely identifies said application as a key value, storing address range sets of a plurality of applications, and
comparing an address range of each program in an address range set specified from said address range set storing unit with said task ID as a key value and said calling source address to specify a program of a calling source of a system call.

33. The operating system according to any one of claim 27 through claim 32, which causes a computer to execute processing of, at the time of starting said application, after loading a program forming said application into a memory, additionally loading a program forming said application into the memory while said application is in execution and adding an address range of the additionally loaded program to said address range set.

34. The operating system according to any one of claim 27 through claim 33, which causes a computer to execute processing of:
storing, in said operation rule storing unit, said operation rule including a description related to allowance/non-allowance of use of a system call based on a parameter to be handed over to the system call, and
comparing a parameter handed over to a system call by said application with said operation rule to determine whether to allow execution of processing.

35. The operating system according to any one of claim 27 through claim 34, which causes a computer to execute processing of:
storing, in said operation rule storing unit, with respect to at least one program among two or more programs forming the application, said operation rule which includes a description related to allowance/non-allowance of use of a system call and with respect to other program, designating an operation rule of other program including a description related to allowance/non-allowance of use of a system call to store an operation rule which describes to the effect that the designated operation rule of other program is conformed to, and
designating an operation rule of other program as an operation rule corresponding to a designated program and when the designated operation rule includes a description to the effect that the designated operation rule is conformed to, determining whether to allow processing of a system call according to the designated operation rule.

36. The operating system according to claim 35, which causes a computer to execute processing of:
recording an identifier of a program as a start point of execution of the application in said address range set, and
when an operation rule of said program has a description to the effect that an operation rule of the program as a start point of execution of the application is conformed to, obtaining an identifier of the program as a start point of the execution from said address range set to specify an operation rule of the program as a start point of execution of the application by using the identifier of said program and applying the operation rule.

37. The operating system according to any one of claim 27 through claim 36, comprising a virtual storage function, wherein a virtual address is used as said address.

38. The operating system according to any one of claim 27 through claim 37, wherein said program and said operation rule corresponding to the program are integrally stored in one file.

39. The operating system according to any one of claim 28 through claim 38, wherein as an identifier of a program, a path name of a file in which the program is stored is used.
